Europäisches Patentamt

European Patent Office

Office européen des brevets

(19)

(11) Veröffentlichungsnummer : **0 425 427 B1**

## (12) EUROPÄISCHE PATENTSCHRIFT

(45) Veröffentlichungstag der Patentschrift :
**15.12.93 Patentblatt 93/50**

(51) Int. Cl.$^5$ : **C01B 33/32**

(21) Anmeldenummer : **90710027.5**

(22) Anmeldetag : **08.10.90**

(54) **Verfahren zur Herstellung von Natriumsilikaten.**

(30) Priorität : **25.10.89 DE 3935464**
**15.02.90 DE 4004624**

(43) Veröffentlichungstag der Anmeldung :
**02.05.91 Patentblatt 91/18**

(45) Bekanntmachung des Hinweises auf die
Patenterteilung :
**15.12.93 Patentblatt 93/50**

(84) Benannte Vertragsstaaten :
**AT BE CH DE DK ES FR GB GR IT LI LU NL SE**

(56) Entgegenhaltungen :
**EP-A- 0 170 040**
**EP-A- 0 293 640**
**FR-A- 2 157 943**
**US-A- 1 517 891**

(56) Entgegenhaltungen :
**CHEMICAL ABSTRACTS, Band 111, Nr. 26, 25.**
**Dezember 1989, Seite 181, Zusammenfassung**
**Nr. 236101v, Columbus, Ohio, US; RO-A-95 539**
**(INSTITUTUL DE CERCETARI METALURGICE**
**(ICEM)) 30-09-1988**

(73) Patentinhaber : **HOECHST**
**AKTIENGESELLSCHAFT**
**D-65926 Frankfurt (DE)**

(72) Erfinder : **Schimmel, Günther, Dr.**
**Ehrenstrasse 16**
**D-5042 Erftstadt (DE)**
Erfinder : **Kotzian, Michael, Dr.**
**Sanddornweg 2**
**D-5042 Erftstadt (DE)**
Erfinder : **Panter, Herbert**
**Brunnenstrasse 35**
**D-5030 Hürth (DE)**
Erfinder : **Tapper, Alexander, Dr.**
**Limitenstrasse 152**
**D-5040 Mönchengladbach (DE)**

## Beschreibung

Die vorliegende Erfindung betrifft ein Verfahren zur Herstellung von amorphen Natriumsilikaten mit einem Wassergehalt von 0,3 bis 6 Gewichts%, vorzugsweise von 0,5 bis 2 Gewichts% und einem Molverhältnis von $SiO_2$ zu $Na_2O$ von (1,9 bis 2,8) : 1 aus einer Wasserglaslösung mit mindestens 20 Gewichts% Feststoff.

Aus der US-PS 3 471 253 ist bekannt, Wasserglaslösung dadurch zu gewinnen, daß man 42 gewichtsprozentige Natronlauge und Sand (Siliciumdioxid) im Gewichtsverhältnis von etwa 2 : 1 in einen Rührautoklaven einbringt und darin 3 Stunden bei 210°C und 16 bar verweilen läßt. Die nach Abkühlen des Autoklaveninhalts auf 85°C entnommene heiße Natriumsilikat-Lösung enthält nach Abfiltrieren des überschüssigen Sandes und anderer Verunreinigungen 57,5 %, Feststoff und weist ein $SiO_2$ zu $Na_2O$-Verhältnis von 1,64 : 1 auf.

Kristalline Natriumsilikate mit Schichtstruktur und einem Molverhältnis von $SiO_2$ zu $Na_2O$ von (1,9 bis 3,5) : 1 stellt man nach dem Verfahren gemäß der DE-OS 37 18 350 dadurch her, daß man Wasserglaslösungen mit einem Feststoffgehalt von 20 bis 65 Gewichts% in einer Sprühtrocknungszone unter Bildung eines wasserhaltigen amorphen Natriumsilikats behandelt, wobei das aus der Sprühtrocknungszone abströmende Abgas mindestens 140°C heiß ist. Das wasserhaltige amorphe Natriumsilikat tempert man in einer Glühzone bei 500 bis 800°C 1 bis 60 Minuten lang in Gegenwart von mindestens 10 Gewichts% eines Rückgutes, welches durch mechanische Zerkleinerung von vorher aus der Glühzone ausgetragenem kristallinem Natriumsilikat erhalten wurde.

Nachteilig ist bei dem zuletzt genannten Verfahren, daß das bei der Sprühtrocknung anfallende Material wegen seiner geringen Schüttdichte von 100 bis 250 g/l ein großes Volumen beansprucht und stark staubt. Weiterhin bedingt der Einsatz von Rückgut während der Temperung einen erheblichen Apparatemehraufwand und erfordert wegen des höheren Materialdurchsatzes ein größer dimensioniertes Drehrohr.

Erfindungsgemäß werden die genannten Nachteile bei der Herstellung von amorphen Natriumsilikaten aus einer Wasserglaslösung mit mindestens 20 Gewichts% Feststoff dadurch überwunden, daß man

a) die Wasserglaslösung durch Umsetzung von Quarzsand mit Natronlauge im Molverhältnis $SiO_2$ zu $Na_2O$ von (2,0 bis 2,8) : 1 bei Temperaturen von 180 bis 240°C und Drucken von 10 bis 30 bar gewinnt;

b) die Wasserglaslösung in einer Sprühtrocknungszone mit Heißluft von 200 bis 300°C bei einer Verweilzeit von 10 bis 25 s und einer Temperatur des die Sprühtrocknungszone verlassenden Abgases von 90 bis 130°C unter Bildung eines pulverförmigen amorphen Natriumsilikates mit einem Wassergehalt (bestimmt als Glühverlust bei 700°C) von 15 bis 23 Gewichts% und einem Schüttgewicht von mehr als 300 g/l behandelt;

c) das pulverförmige Natriumsilikat gemäß b) in einen geneigt angeordneten, mit Einrichtungen zur Bewegung von Feststoff ausgerüsteten Drehrohrofen einbringt und darin mit Rauchgas bei Temperaturen von 250 bis zu 500°C 1 bis 60 Minuten im Gegenstrom behandelt, wobei der Drehrohrofen derart isoliert ist, daß die Temperatur seiner Außenwand weniger als 60°C beträgt;

d) das aus dem Drehrohrofen austretende amorphe Natriumsilikat mit Hilfe eines mechanischen Brechers auf Korngrößen von 0,1 bis 12 mm zerkleinert.

Das Verfahren gemäß der Erfindung kann weiterhin wahlweise auch noch dadurch ausgestaltet sein, daß

aa) man das zerkleinerte Natriumsilikat mit Hilfe einer Mühle auf Korngrößen von 2 bis 400 µm mahlt;

bb) eine mit einer Umfangsgeschwindigkeit von 0,5 bis 60 $\frac{m}{s}$ betriebene mechanische Mühle verwendet ist;

cc) eine Luftstrahlmühle verwendet ist;

dd) eine keramisch ausgekleidete Kugelmühle verwendet ist;

ee) eine keramisch ausgekleidete Schwingmühle verwendet ist;

ff) das Abgas aus dem Drehrohrofen in seinem mittleren Bereich und im Bereich seines der Einbringung des pulverförmigen, amorphen Natriumsilikates mit einem Wassergehalt von 15 bis 23 Gewichts% dienenden Endes abgesaugt und mit Hilfe eines Trockenentstaubungsfilters gereinigt wird, wobei das aus dem Trockenentstaubungsfilter entnommene Natriumsilikat dem zur Einbringung in den Drehrohrofen bestimmten pulverförmigen, amorphen Natriumsilikat quasikontinuierlich zugemischt wird;

gg) man das gemahlene Natriumsilikat einem Walzenkompaktierer zuführt, durch welchen es bei einem Walzenpreßdruck von 20 bis 40 kN/cm Walzenbreite zu kompakten Teilen verpreßt wird;

hh) man die kompakten Teile nach Vorzerkleinern durch Hindurchpressen durch Siebe zu einem Granulat mit einem Schüttgewicht von 700 bis 1000 g/l verarbeitet.

Natriumsilikate können als Wasser enthärtende Mittel verwendet werden.

Beim Verfahren gemäß der Erfindung wird durch die niedrige Temperatur und die kurze Verweilzeit bei der Versprühung der Wasserglaslösung ein gut handhabbares Natriumsilikat mit hohem Schüttgewicht erhalten.

Durch den niedrigen Wärmeübergang durch die Wandung des Drehrohrofens infolge seiner guten Isolierung wird beim Verfahren gemäß der Erfindung der Klebeneigung des Natriumsilikates entgegengewirkt.

Beim erfindungsgemäßen Verfahren ist die Verwendung einer langsam laufenden mechanischen Mühle (beispielsweise Scheibenmühle, Schlägermühle, Hammermühle oder Walzenmühle) er forderlich, um Eisenabrieb von den Mahlwerkzeugen zu vermeiden.

Verwendet man beim Verfahren gemäß der Erfindung eine keramisch ausgekleidete Kugelmühle oder eine Schwingmühle oder eine Luftstrahlmühle für Feinstprodukte, d.h. mit Durchmessern von 6 bis 10 $\mu$m, so erfolgt ebenfalls keine Kontamination des Natriumsilikates durch Metallabrieb.

Beim erfindungsgemäßen Verfahren wird durch die gleichzeitige Absaugung von staubhaltigem Abgas im mittleren Bereich des Drehrohres und im Bereich seines aufgabeseitigen Endes die Staubbelastung im Abgas beträchtlich erniedrigt, weil Staub in erster Linie bei der Aufgabe des Natriumsilikates in den Drehrohrofen freigesetzt und weil die Gasgeschwindigkeit im Aufgabebereich des amorphen, wasserhaltigen Natriumsilikates herabgesetzt wird.

Mit dem Verfahren gemäß der Erfindung wird durch Kompaktieren ein abriebfestes Granulat erhalten, welches in Wasser sehr schnell zerfällt.

Die in den Beispielen 2 und 3 angegebenen Resthärten wurden nach folgender Vorschrift ermittelt:

2,5 g Natriumsilikat wurden in 1000 ml Leitungswasser mit 18° dH (entspricht einem Gehalt von 85 mg Ca und 15 mg Mg je Liter) suspendiert. Die Suspension wurde 30 Minuten bei 60°C mit einem Magnetrührer mit ca. 500 Upm gerührt. Nach schnellem Abkühlen in Eiswasser auf 20°C wurde die Suspension über ein Membranfilter (Porenweite: 0,45 $\mu$m) filtriert. Im klaren Filtrat wurden die Gehalte an Calcium und Magnesium mittels Atomabsorption bestimmt.

Beispiel 1 (nach dem Stand der Technik)

Aus einer Wasserglaslösung mit 45 % Feststoffgehalt wurde in einem Heißluftsprühturm (Abgastemperatur: 145°C) amorphes Natriumdisilikat erzeugt, welches einen Glühverlust bei 700°C von 19% und ein Schüttgewicht von 220 g/l aufwies.

Über eine Dosierschnecke wurden 60 kg/h amorphes Natriumdisilikat mit einem Wassergehalt (bestimmt als Glühverlust bei 700°C) von 18 Gewichts% und 15 kg/h eines Rückgutes, welches durch Zerkleinern eines in einem früheren Ansatz erhaltenden Produktes auf weniger als 250 $\mu$m gewonnen worden war, in einen direkt befeuerten Drehrohrofen (Länge: 5 m; Durchmesser: 78 cm; Neigung: 1,2°) an seinem der Flamme gegenüberliegenden Ende aufgegeben, während das kristalline Produkt an der Flammseite ausgetragen wurde. Die Temperatur an der heißesten Stelle des Drehrohrofens betrug 740°C.

An der Wand des Drehrohrofens bildeten sich keine Verklebungen; das ausgetragene Natriumdisilikat war weitgehend pulverförmig.

Beispiel 2 (gemäß der Erfindung)

In einem mit Nickel ausgekleideten zylindrischen Autoklaven mit Rühreinrichtung wurden Sand (99 Gewichts% $SiO_2$; Körnung: 90 % < 0,5 mm) und 50 gewichtsprozentige Natronlauge im molaren Verhältnis von $SiO_2$ zu $Na_2O$ von 2,15 : 1 eingefüllt. Die Mischung wurde bei gerührtem Autoklaven durch Aufpressen von Wasserdampf (16 bar) auf 200°C erhitzt und 60 Minuten bei dieser Temperatur gehalten. Dann wurde der Inhalt des Autoklaven über ein Ausdampfgefäß in einen Behälter entspannt und nach Zusatz von 0,3 Gewichts% Perlit als Filterhilfsmittel bei 90°C zur Abscheidung des Unlöslichen über ein Scheibendruckfilter filtriert. Als Filtrat wurde eine klare Wasserglaslösung mit einem molaren Verhältnis von $SiO_2$ zu $Na_2O$ von 2,04 : 1 erhalten. Durch Verdünnen mit Wasser wurde ein Feststoffgehalt von 50 % eingestellt.

In einen mit einem Scheibenzerstäuber ausgerüsteten Heißluftsprühturm, welcher über eine gasbefeuerte Brennkammer beheizt wurde und mit einem pneumatisch abreinigenden Schlauchfilter zur Produktabscheidung verbunden war, wurde die Wasserglaslösung versprüht, wobei die Brennkammer so eingestellt war, daß das am Turmkopf eintretende heiße Gas eine Temperatur von 260°C aufwies. Die Menge der zu versprühenden Wasserglaslösung wurde so eingestellt, daß die Temperatur des den Sprühturm verlassenden Silikat-Gas-Gemisches 105°C betrug. Aus dem Volumen des Sprühturmes und aus dem Gasdurchsatz durch den Sprühturm wurde die Verweilzeit zu 16 Sekunden berechnet. Das am Schlauchfilter abgeschiedene amorphe Natriumdisilikat wies bei geringer Staubneigung ein Schüttgewicht von 480 g/l, einen Eisengehalt von 0,01 Gewichts%, ein $SiO_2$ : $Na_2O$-Verhältnis von 2,04 : 1 und einen Wassergehalt (bestimmt als Glühverlust bei 700°C) von 19,4 % auf; sein mittlerer Teilchendurchmesser betrug 52 $\mu$m.

Der in Beispiel 1 beschriebene Drehrohrofen war mit mehrlagiger Mineralwolle und einem Blechmantel derart isoliert worden, daß bei einer Temperatur im Inneren des Drehrohrofens von 390°C an seiner Außenhaut eine Temperatur von maximal 38°C auftrat. In diesen Drehrohrofen wurden stündlich 60 kg des amorphen Natriumdisilikates eingetragen, wobei sich keine Verklebungen ausbildeten. Das den Drehrohrofen verlassende amorphe Natriumdisilikat ($Na_2Si_2O_5$), welches einen Wassergehalt von 0,7 Gewichts%, (bestimmt als Glühverlust bei 700°C) aufwies, wurde mit Hilfe eines mechanischen Brechers auf eine Körnung von weniger als 6 mm zerkleinert und nach einer Zwischenkühlung auf einer Scheibenmühle (Durchmesser: 30 cm) bei 400 min⁻¹ auf einen mittleren Teilchendurchmesser von 95 μm gemahlen, wobei der Eisengehalt des gemahlenen Produktes mit dem des in den Drehrohrofen eingetragenen Natriumdisilikates identisch blieb.

Das Abgas des Drehrohrofens wurde im Eintragsbereich für das amorphe Natriumdisilikat mit einem Wassergehalt (bestimmt als Glühverlust bei 700°C) von 19,4 Gewichts% abgesaugt und einem Waschturm zugeführt. Mit dem Abgas wurden stündlich 3 kg Natriumdisilikat ausgetragen.

Die Resthärte des so hergestellten Natriumdisilikates betrug 2,5 mg/l Ca und weniger als 1 mg/l Mg.

Beispiel 3 (gemäß der Erfindung)

Beispiel 2 wurde mit der Änderung wiederholt, daß die Temperatur im Inneren des Drehrohrofens 300°C und an seiner Außenhaut 35°C betrug. Dabei wies das den Drehrohrofen verlassende amorphe Natriumdisilikat einen Wassergehalt (bestimmt als Glühverlust bei 700°C) von 5 Gewichts% auf.

Die Resthärte des so hergestellten Natriumdisilikates betrug 3,5 mg/l Ca und 1,5 mg/l Mg.

Beispiel 4 (gemäß der Erfindung)

Das gemäß Beispiel 2 erhaltene Produkt mit einem mittleren Teilchendurchmesser von 95 μm wurde mit Hilfe einer Fließbett-Gegenstrahlmühle mit eingebauter mechanischer Sichtvorrichtung weiter zerkleinert. In Abhängigkeit von der eingestellten Sichterdrehzahl erhielt man ein abriebfreies Natriumdisilikat mit einem mittleren Teilchendurchmesser von 2 bis 15 μm.

Beispiel 5 (gemäß der Erfindung)

Das gemäß Beispiel 2 erhaltene Produkt wurde mit Hilfe einer mit Porzellan ausgekleideten und mit Korundkugeln gefüllten Kugelmühle weiter zerkleinert. Es wurde ein abriebfreies Natriumdisilikat mit einem von der Mahldauer abhängigen mittleren Teilchendurchmesser von 5 bis 14 μm erhalten.

Beispiel 6 (gemäß der Erfindung)

Das gemäß Beispiel 2 erhaltene Produkt wurde in einem Walzenkompaktierer mit einem Preßdruck der Kompaktierwalzen von 30 kN/cm Walzenbreite mit anschließender Zerkleinerung der Schulpe in einem Siebgranulator zu einem staubfreien Granulat mit einem mittleren Teilchendurchmesser von 900 μm, einem Schüttgewicht von 870 g/l und hoher Abriebfestigkeit verarbeitet.

Zur Bestimmung der Abriebfestigkeit werden 50 g Granulat in einer Rollkugelmühle (Länge: 10 cm; Durchmesser: 11,5 cm; 8 Stahlkugeln mit 2 cm Durchmesser) 5 Minuten bei einer Drehzahl von 100 min⁻¹ behandelt.

Nach Durchführung des Abriebtestes betrug der mittlere Teilchendurchmesser noch 720 μm, was einer Abnahme um 20 % entspricht.

Beispiel 7 (gemäß der Erfindung)

Beispiel 2 wurde mit der Änderung wiederholt, daß das Abgas des Drehrohrofens an zwei Stellen abgesaugt wurde; und zwar neben im Eintragsbereich für das amorphe Natriumdisilikat mit einem Wassergehalt von 19,4 Gewichts% zusätzlich an einer Stelle des Drehrohrofens, welche ca. 2 m von dem genannten Eintragsbereich in Richtung der Drehrohrachse entfernt war. Beide Abgasströme wurden vereinigt und der in ihnen enthaltene Feststoff wurde mit Hilfe eines hitzebeständigen Schlauchfilters abgeschieden. Der abgeschiedene Feststoff wurde zusammen mit dem amorphen Natriumdisilikat mit einem Wassergehalt von 19,4 Gewichts% wieder in den Drehrohrofen eingetragen, so daß kein Natriumdisilikat verlorenging. Dadurch erhöhte sich der Durchsatz des Drehrohrofens auf 70 kg/h, dennoch traten keine Verklebungen im Inneren des Drehrohrofens auf.

Beispiel 8 (Vergleichsbeispiel)

Beispiel 2 wurde mit der Änderung wiederholt, daß das am Kopf des Heißluftsprühturmes eintretende heiße Gas eine Temperatur von 330°C aufwies. Die Temperatur des den Sprühturm verlassenden Silikat-Gas-Gemisches betrug 140°C. Das am Schlauchfilter abgeschiedene Natriumdisilikat wies ein Schüttgewicht von 250 g/l, einen Wassergehalt (bestimmt als Glühverlust bei 700°C) von 17,9 Gewichts% und einen mittleren Teilchendurchmesser von 60 μm auf. Dieses Natriumdisilikat staubte stark.

Beispiel 9 (Vergleichsbeispiel)

Beispiel 2 wurde mit der Abänderung wiederholt, daß der Drehrohrofen nur derart isoliert war, daß bei einer Temperatur im Inneren des Drehrohrofens von 490°C an seiner Außenhaut eine Temperatur von maximal 150°C auftrat. Dadurch bildeten sich an der Innenwandung des Drehrohrofens großflächige Verklebungen aus, die häufig mechanisch abgestoßen werden mußten. Aus dem Drehrohrofen wurde ein Produkt ausgetragen, das teilweise Fußballgröße aufwies und vom mechanischen Brecher nur schwierig zu zerkleinern war.

Beispiel 10 (Vergleichsbeispiel)

Beispiel 2 wurde mit der Änderung wiederholt, daß das mit Hilfe des mechanischen Brechers zerkleinerte Natriumdisilikat unter Verwendung einer Pralltellermühle bei 10000 min$^{-1}$ auf einen mittleren Teilchendurchmesser von 83 μm gemahlen wurde. Das gemahlene Produkt hatte einen Graustich und wies einen Eisengehalt vor 0,02 Gewichts% auf.

## Patentansprüche

1. Verfahren zur Herstellung von amorphen Natriumsilikaten mit einem Wassergehalt von 0,3 bis 6 Gewichts%, vorzugsweise von 0,5 bis 2 Gewichts% und einem Molverhältnis von $SiO_2$ zu $Na_2O$ von (1,9 bis 2,8) : 1 aus einer Wasserglaslösung mit mindestens 20 Gewichts% Feststoff, dadurch gekennzeichnet, daß man

a) die Wasserglaslösung durch Umsetzung von Quarzsand mit Natronlauge im Molverhältnis $SiO_2$ zu $Na_2O$ von (2,0 bis 2,8) : 1 bei Temperaturen von 180 bis 240°C und Drucken von 10 bis 30 bar gewinnt;

b) die Wasserglaslösung in einer Sprühtrocknungszone mit Heißluft von 200 bis 300°C bei einer Verweilzeit von 10 bis 25 s und einer Temperatur des die Sprühtrocknungszone verlassenden Abgases von 90 bis 130°C unter Bildung eines pulverförmigen amorphen Natriumsilikates mit einem Wassergehalt (bestimmt als Glühverlust bei 700°C) von 15 bis 23 Gewichts% und einem Schüttgewicht von mehr als 300 g/l behandelt;

c) das pulverförmige Natriumsilikat gemäß b) in einen geneigt angeordneten, mit Einrichtungen zur Bewegung von Feststoff ausgerüsteten Drehrohrofen einbringt und darin mit Rauchgas bei Temperaturen von 250 bis zu 500°C 1 bis 60 Minuten im Gegenstrom behandelt, wobei der Drehrohrofen derart isoliert ist, daß die Temperatur seiner Außenwand weniger als 60°C beträgt;

d) das aus dem Drehrohrofen austretende amorphe Natriumsilikat mit Hilfe eines mechanischen Brechers auf Korngrößen von 0,1 bis 12 mm zerkleinert.

2. Verfahren nach Anspruch 1, dadurch gekennzeichnet, daß man das zerkleinerte Natriumsilikat mit Hilfe einer Mühle auf Korngrößen von 2 bis 400 μm mahlt.

3. Verfahren nach Anspruch 2, dadurch gekennzeichnet, daß eine mit einer Umfangsgeschwindigkeit von 0,5 bis 60 $\frac{m}{s}$ betriebene mechanische Mühle verwendet ist.

4. Verfahren nach Anspruch 2, dadurch gekennzeichnet, daß eine Luftstrahlmühle verwendet ist.

5. Verfahren nach Anspruch 2, dadurch gekennzeichnet, daß eine keramisch ausgekleidete Kugelmühle verwendet ist.

6. Verfahren nach Anspruch 2, dadurch gekennzeichnet, daß eine keramisch ausgekleidete Schwingmühle verwendet ist.

7. Verfahren nach mindestens einem der Ansprüche 1 bis 6, dadurch gekennzeichnet, daß das Abgas aus dem Drehrohrofen in seinem mittleren Bereich und im Bereich seines der Einbringung des pulverförmigen, amorphen Natriumsilikates mit einem Wassergehalt von 15 bis 23 Gewichts% dienenden Endes abgesaugt und mit Hilfe eines Trockenentstaubungsfilters gereinigt wird, wobei das aus dem Trockenentstaubungsfilters entnommene Natriumsilikat dem zur Einbringung in den Drehrohrofen bestimmten pulverförmigen, amorphen Natriumsilikat quasikontinuierlich zugemischt wird.

8. Verfahren nach mindestens einem der Ansprüche 1 bis 7, dadurch gekennzeichnet, daß man das gemahlene Natriumsilikat einem Walzenkompaktierer zuführt, durch welchen es bei einem Walzenpreßdruck von 20 bis 40 kN/cm Walzenbreite zu kompakten Teilen verpreßt wird.

9. Verfahren nach Anspruch 8, dadurch gekennzeichnet, daß man die kompakten Teile nach Vorzerkleinern durch Hindurchpressen durch Siebe zu einem Granulat mit einem Schüttgewicht von 700 bis 1000 g/l verarbeitet.

## Claims

1. A process for producing amorphous sodium silicates having a water content of 0.3 to 6% by weight, preferably of 0.5 to 2% by weight, and an $SiO_2/Na_2O$ molar ratio of (1.9 to 2.8) : 1 from a waterglass solution containing at least 20% by weight of solids, which comprises

a) obtaining the waterglass solution by reacting quartz sand with sodium hydroxide solution in an $SiO_2/Na_2O$ molar ratio of (2.0 to 2.8) : 1 at temperatures from 180 to 240°C and pressures from 10 to 30 bar,

b) treating the waterglass solution in a spray-drying zone with hot air at 200 to 300°C for a residence time of 10 to 25 seconds and at a temperature of the exit gas leaving the spray-drying zone of 90 to 130°C, to form a pulverulent amorphous sodium silicate having a water content (determined as the loss on ignition at 700°C) of 15 to 23% by weight and a bulk density of more than 300 g/l,
c) introducing the pulverulent sodium silicate according to b) into an obliquely arranged rotary kiln fitted with devices for moving solids and treating it therein with flue gas in countercurrent at temperatures from 250 to 500°C for 1 to 60 minutes, the rotary kiln being insulated in such a way that its outside wall temperature is less than 60°C, and
d) comminuting the amorphous sodium silicate emerging from the rotary kiln by means of a mechanical crusher to grain sizes of 0.1 to 12 mm.

2. The process as claimed in claim 1, wherein the comminuted sodium silicate is ground by means of a mill to grain sizes of 2 to 400 μm.

3. The process as claimed in claim 2, wherein a mechanical mill running at a circumferential speed of 0.5 to 60 m/s is used.

4. The process as claimed in claim 2, wherein an air jet mill is used.

5. The process as claimed in claim 2, wherein a ceramically lined ball mill is used.

6. The process as claimed in claim 2, wherein a ceramically lined vibratory mill is used.

7. The process as claimed in at least one of claims 1 to 6, wherein the exit gas from the rotary kiln is extracted in the central region thereof and in the region of the end where the pulverulent amorphous sodium silicate having a water content of 15 to 23% by weight is introduced, and purified by means of a dry dust filter, the sodium silicate taken from the dry dust filter being quasi-continuously admixed to the pulverulent amorphous sodium silicate destined to be introduced into the rotary kiln.

8. The process as claimed in at least one of claims 1 to 7, wherein the ground sodium silicate is fed to a roll compactor, by means of which it is compressed at a roll-pressing force of 20 to 40 kN/cm of roll width to give compact pieces.

9. The process as claimed in claim 8, wherein the compact pieces are, after pre-comminution by forcing them through screens, processed to give granules having a bulk density of 700 to 1000 g/l.

**Revendications**

1. Procédé pour la fabrication de silicates de sodium amorphes ayant une teneur en eau de 0,3 à 6 % en poids, de préférence de 0,5 à 2 % en poids, et un rapport molaire $SiO_2/Na_2O$ de (1,9 à 2,8) : 1 à partir d'une solution de verre soluble à au moins 20 % en poids de solides, caractérisé en ce que
a) on obtient la solution de verre soluble par réaction de sable quartzeux avec la lessive de soude dans un rapport molaire $SiO_2/Na_2O$ de (2,0 à 2,8) : 1 à des températures de 180 à 240°C et sous des pressions de 10 à 30 bars ;
b) on traite la solution de verre soluble dans une zone de séchage par pulvérisation par l'air chaud à 200-300°C avec une durée de passage de 10 à 25 s et à une température du gaz résiduaire quittant la zone de séchage par pulvérisation de 90 à 130°C, avec formation d'un silicate de sodium amorphe pulvérulent ayant une teneur en eau (déterminée comme perte au feu à 700°C) de 15 à 23 % en poids et une densité apparente de plus de 300 g/l ;
c) on introduit le silicate de sodium pulvérulent dans un four tubulaire tournant incliné muni de dispositifs pour la circulation de la matière solide et on le traite dans celui-ci par un gaz de fumée à des températures de 250 à 500°C pendant 1 à 60 min à contre-courant, le four tubulaire tournant étant isolé de telle manière que la température de sa paroi extérieure soit de moins de 60°C ;
d) on broie le silicate de sodium amorphe sortant du four tubulaire tournant à des grosseurs de grains de 0,1 à 12 mm au moyen d'un broyeur mécanique.

2. Procédé selon la revendication 1, caractérisé en ce que l'on broie le silicate de sodium concassé au moyen d'un broyeur à des grosseurs de grains de 2 à 400 μm.

3. Procédé selon la revendication 2, caractérisé en ce que l'on utilise un broyeur mécanique fonctionnant à une vitesse périphérique de 0,5 à 60 m/s.

4. Procédé selon la revendication 2, caractérisé en ce que l'on on utilise un broyeur à jet d'air.

5. Procédé selon la revendication 2, caractérisé en ce que l'on utilise un broyeur à boulets doublé de céramique.

6. Procédé selon la revendication 2, caractérisé en ce que l'on utilise un désintégrateur à mouvements oscillatoires doublé de céramique.

7. Procédé selon l'une au moins des revendications 1 à 6, caractérisé en ce que le gaz résiduaire est extrait du four tubulaire tournant dans sa zone moyenne et dans la zone de son extrémité servant à l'introduction du silicate de sodium amorphe pulvérulent d'une teneur en eau de 15 à 23 % en poids et il est purifié au moyen d'un filtre dépoussiéreur à sec, le silicate de sodium retiré du filtre dépoussiéreur à sec étant mélangé en quasi continu avec le silicate de sodium amorphe pulvérulent destiné à l'introduction dans le four tubulaire tournant.

8. Procédé selon l'une au moins des revendications 1 à 7, caractérisé en ce que l'on envoie le silicate de sodium broyé à un compacteur à cylindres à travers lequel il est comprimé en morceaux compacts sous une pression des cylindres de 20 à 40 kN/cm de largeur des cylindres.

9. Procédé selon la revendication 8, caractérisé en ce que l'on traite les morceaux compacts après prébroyage par passage sous pression à travers des tamis en granulat d'une densité apparente de 700 à 1000 g/l.